(19) **Europäisches Patentamt**
**European Patent Office**
**Office européen des brevets**

(11) **EP 3 044 435 B1**

(12) **FASCICULE DE BREVET EUROPEEN**

(45) Date de publication et mention
de la délivrance du brevet:
**01.11.2017 Bulletin 2017/44**

(51) Int Cl.:
**F02C 3/16** *(2006.01)*    **F23R 3/38** *(2006.01)*

(21) Numéro de dépôt: **14777730.4**

(86) Numéro de dépôt international:
**PCT/FR2014/052253**

(22) Date de dépôt: **11.09.2014**

(87) Numéro de publication internationale:
**WO 2015/036703 (19.03.2015 Gazette 2015/11)**

(54) **PROCEDE DE SURVEILLANCE D'UN DEGRE DE COKEFACTION AU NIVEAU DE JOINTS PAR UN ARBRE DE GENERATEUR DE GAZ**

VERFAHREN ZUR ÜBERWACHUNG EINES VERKOKUNGSGRADES BEI ABDICHTUNGEN DURCH EINE GASGENERATORWELLE

METHOD FOR THE MONITORING OF A DEGREE OF COKING AT SEALS BY A GAS GENERATOR SHAFT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.09.2013 FR 1358860**

(43) Date de publication de la demande:
**20.07.2016 Bulletin 2016/29**

(73) Titulaire: **Safran Helicopter Engines**
**64510 Bordes (FR)**

(72) Inventeurs:
• **DEBBOUZ, Nadir Christian**
**F-77550 Moissy-Cramayel (FR)**
• **FAUPIN, Francois Xavier Marie**
**F-77550 Moissy Cramayel (FR)**
• **LAMAZERE, Fabien**
**F-77550 Moissy-Cramayel (FR)**

(74) Mandataire: **Regimbeau**
**20, rue de Chazelles**
**75847 Paris Cedex 17 (FR)**

(56) Documents cités:
**EP-A1- 1 605 148     EP-A2- 1 840 470**
**FR-A- 1 424 457     FR-A1- 2 942 001**

EP 3 044 435 B1

**Description**

DOMAINE DE L'INVENTION

Le domaine de l'invention est celui de la surveillance du degré de cokéfaction au niveau de joints dynamiques dans une turbomachine, et des turbomachines équipées de systèmes permettant ladite surveillance.

ETAT DE LA TECHNIQUE

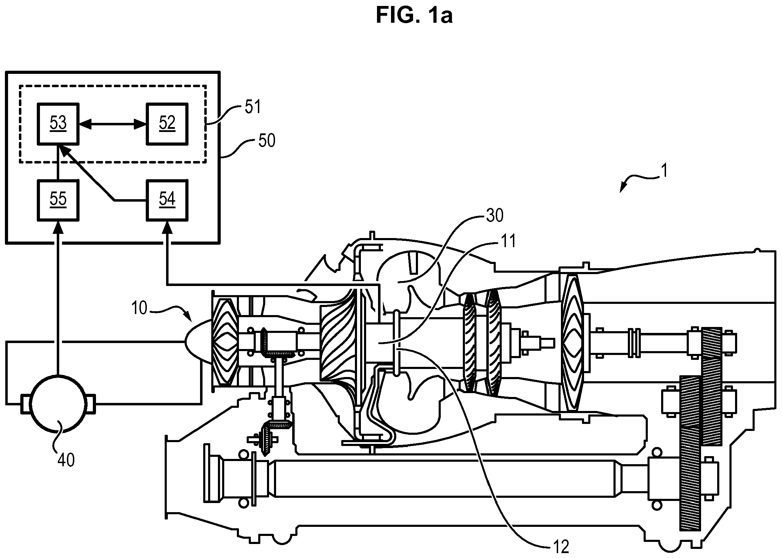

En référence à la figure 1a, certaines turbomachines 1, comme par exemple les turbomoteurs, comprennent un générateur de gaz 10 comprenant un arbre rotatif 11 sur lequel est montée une roue d'injection 12, qui est donc elle-même rotative.

La roue d'injection présente une pluralité d'orifices qui débouchent dans une chambre de combustion 30. De cette façon la roue d'injection, lors de sa rotation, pulvérise du carburant par centrifugation dans la chambre de combustion.

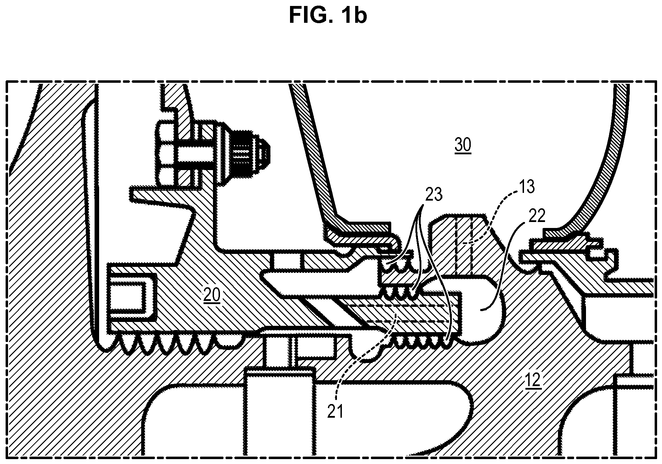

En référence à la figure 1b, la turbomachine comprend également une rampe d'injection 20, qui est une pièce fixe de révolution montée autour de l'arbre 11 du générateur de gaz 10.

La rampe d'injection achemine du carburant jusqu'à la roue d'injection. Le carburant circule dans un conduit interne 21 de la rampe d'injection, et débouche dans une cavité 22 avant de pénétrer dans la roue d'injection.

Pour assurer l'étanchéité entre la roue d'injection et la rampe, une pluralité de joints dynamiques tels que des joints labyrinthes 23 sont prévus. Une telle configuration est par exemple divulguée dans le document EP-1840470. Or, il arrive souvent que de la coke se forme dans les gorges de ces joints, entrainant de ce fait l'apparition de frottements entre la roue d'injection et la rampe d'injection. Les frottements peuvent s'aggraver jusqu'à entrainer le blocage complet de l'arbre du générateur de gaz ; il n'est alors plus possible de démarrer le moteur.

Dans le cas de difficultés de démarrage, les opérateurs réalisent des opérations de recherches de pannes décrites dans un manuel de maintenance de la turbomachine. Ces recherches sont généralement longues et peu efficaces, puisqu'il faut passer un temps parfois important avant de détecter la cause des difficultés de démarrage, en l'espèce une cokéfaction au niveau des joints dynamiques (en effet, de nombreuses autres causes sont envisageables).

De plus, ces opérations de recherche impliquent une indisponibilité imprévue de la turbomachine, et donc de l'aéronef dans lequel elle est installée, qui peuvent en outre nécessiter d'annuler une ou plusieurs missions de vol prévues. Ces opérations représentent donc un coût important.

Aucune méthode alternative permettant d'anticiper le blocage de l'arbre du générateur de gaz à cause de la cokéfaction au niveau des joints dynamiques, et permettant ainsi d'éviter les opérations de recherche de panne, n'a encore été proposée.

Il existe donc un besoin pour un procédé de surveillance d'un degré de cokéfaction au niveau des joints dynamiques.

PRESENTATION DE L'INVENTION

L'invention a pour but de remédier au problème présenté ci-avant, en proposant un procédé de surveillance d'un degré de cokéfaction au niveau des joints dynamiques d'une turbomachine.

Un autre but de l'invention est de pouvoir surveiller ce degré de cokéfaction lors de l'utilisation de la turbomachine, sans imposer d'indisponibilité de la turbomachine.

A cet égard, l'invention a pour objet un procédé de surveillance d'un degré de cokéfaction au niveau des joints dynamiques d'une turbomachine comprenant :

- un générateur de gaz comprenant un arbre rotatif et une roue d'injection montée sur ledit arbre, la roue d'injection étant adaptée pour pulvériser du carburant par centrifugation, et
- une rampe d'injection, adaptée pour acheminer du carburant jusqu'à la roue d'injection,
- des joints dynamiques adaptés pour assurer une étanchéité entre la roue d'injection et la rampe d'injection,

le procédé étant caractérisé en ce qu'il comprend les étapes consistant à :

- mesurer, au cours d'une phase d'autorotation de la turbomachine, la vitesse de rotation de l'arbre de générateur de gaz, et
- déterminer, à partir de l'évolution temporelle de la vitesse de rotation ainsi mesurée, un degré de cokéfaction au niveau des joints dynamiques.

Avantageusement, mais facultativement, le procédé selon l'invention peut en outre comprendre au moins l'une des caractéristiques suivantes :

- l'étape de détermination du degré de cokéfaction au niveau des joints dynamiques comprend la mesure de la décélération de l'arbre de générateur de gaz entre deux vitesses de rotation de l'arbre.
- la mesure de la décélération est réalisée entre une première vitesse de rotation comprise entre 1000 et 2500 tours par minute, de préférence égale à 1000 tours par minute, et une seconde vitesse de rotation comprise entre 500 et 1000 tours par minute, de préférence égale à 700 tours par minute.
- la détermination du degré de cokéfaction au niveau des joints dynamiques comprend l'une des étapes parmi le groupe suivant :

◦ la comparaison de la décélération de l'arbre de générateur de gaz à un seuil prédéterminé,

◦ la détermination d'une différence entre la décélération mesurée et une décélération initiale de la turbomachine entre les mêmes vitesses de rotation de l'arbre, et la comparaison de la différence à un seuil prédéterminé, et

◦ la détermination, à partir de mesures précédentes de la décélération, d'une vitesse de variation de ladite décélération en fonction de l'utilisation de la turbomachine, et la comparaison de ladite vitesse de variation à un seuil prédéterminé.

- Le procédé est mis en oeuvre dans une turbomachine comprenant en outre un démarreur, et comprend les étapes consistant à :

◦ mesurer, au cours d'une phase d'amorçage de la rotation de l'arbre de générateur de gaz par le démarreur lors du démarrage de la turbomachine, un courant traversant le démarreur et une tension aux bornes du démarreur,

◦ déterminer, à partir du courant et de la tension mesurés, une donnée représentative d'un couple résistif de l'arbre du générateur de gaz.

- l'étape de détermination d'un degré de cokéfaction au niveau des joints dynamiques est réalisée à partir de l'évolution temporelle de la vitesse de rotation de l'arbre du générateur de gaz et de la valeur ou l'évolution en fonction de l'utilisation de la turbomachine de la donnée représentative du couple résistif de l'arbre.

L'invention a également pour objet un système de surveillance d'un état de cokéfaction au niveau des joints dynamiques d'une turbomachine comprenant :

- un générateur de gaz, comprenant un arbre rotatif et une roue d'injection montée sur ledit arbre, la roue étant adaptée pour pulvériser du carburant par centrifugation,
- une rampe d'injection adaptée pour acheminer du carburant jusqu'à la roue d'injection, et
- des joints dynamiques, adaptés pour assurer une étanchéité entre la roue d'injection et la rampe d'injection,

le système de surveillance étant adapté pour la mise en oeuvre du procédé selon la présentation qui précède et comprenant :

- au moins un capteur de la vitesse de rotation de l'arbre du générateur de gaz, adapté pour effectuer des acquisitions à une fréquence supérieure ou égale à 2 Hz, et

- une unité de traitement, comportant une mémoire et des moyens de traitement adaptés pour traiter les mesures de vitesse de rotation pour déterminer un degré de cokéfaction au niveau des joints dynamiques.

Le système de surveillance selon l'invention, quand installé dans une turbomachine comprenant en outre un démarreur, peut en outre comprendre en outre au moins un dispositif de mesure d'une tension aux bornes démarreur et du courant le traversant, ledit dispositif de mesure étant adapté pour acquérir des mesures de tension et de courant à une fréquence supérieure ou égale à 10 Hz.

L'invention a également pour objet une turbomachine, comprenant :

- un générateur de gaz, comprenant un arbre rotatif et une roue d'injection montée sur ledit arbre, la roue étant adaptée pour pulvériser du carburant par centrifugation,
- une rampe d'injection adaptée pour acheminer du carburant jusqu'à la roue d'injection, et
- des joints dynamiques, adaptés pour assurer une étanchéité entre la roue d'injection et la rampe d'injection,

la turbomachine étant caractérisée en ce qu'elle comprend en outre un système de surveillance selon la description qui précède.

Le procédé de surveillance ainsi proposé permet d'évaluer un degré de cokéfaction au niveau des joints dynamiques d'une turbomachine, et de détecter un stade critique avant une impossibilité de démarrer la turbomachine.

Ceci permet le cas échéant de planifier une maintenance pour nettoyer ou remplacer les joints dynamiques.

DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :

- Les figures 1a et 1b, déjà décrites, représentent schématiquement le principe de fonctionnement d'une turbomachine équipée d'une roue d'injection,
- Les figures 2a et 2b représentent les principales étapes d'un procédé de surveillance selon deux modes de réalisation de l'invention.
- La figure 3a représente la durée de décélération de l'arbre de générateur de gaz pour différents degrés d'utilisations de la turbomachine.
- La figure 3b représente l'évolution d'une décélération d'un arbre de générateur de gaz en fonction de l'utilisation de la turbomachine.

- La figure 4 représente l'évolution d'une donnée représentative du couple résistif d'un arbre générateur de gaz en fonction de l'utilisation de la turbomachine.

DESCRIPTION DETAILLEE D'AU MOINS UN MODE DE MISE EN OEUVRE DE L'INVENTION

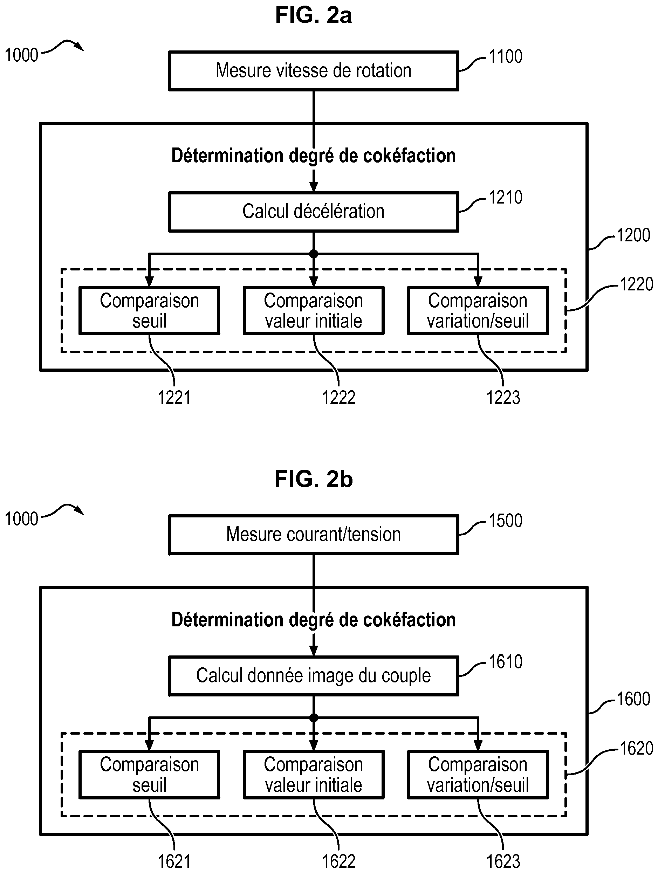

On a représenté en figures 2a et 2b deux modes de réalisation d'un procédé de surveillance de la cokéfaction au niveau des joints dynamiques d'une turbomachine.

Comme sur la représentation de la figure 1a, la turbomachine 1, pouvant être un turbomoteur, comprend un générateur de gaz 10, comprenant un arbre rotatif 11, entrainant en rotation une roue d'injection 12 montée sur celui-ci.

La turbomachine comprend en outre une rampe d'injection 20 fixe, qui est une pièce de révolution autour de l'arbre du générateur de gaz. La rampe d'injection 20 comprend au moins une canalisation interne 21 qui débouche dans une cavité circonférentielle 22.

La turbomachine comprend également une chambre de combustion 30 dans laquelle a lieu l'allumage du carburant pour la propulsion de l'aéronef dans lequel est montée la turbomachine.

La roue d'injection 12 comprend des canaux internes radiaux 13 qui débouchent d'un côté dans la cavité circonférentielle 22 et de l'autre côté dans la chambre de combustion 30.

Le carburant est acheminé par la rampe d'injection jusqu'à la cavité 22, où il se trouve alors entrainé dans la roue d'injection 12 au travers des orifices débouchant des canaux 13 agencés dans celle-ci. Le carburant est ensuite pulvérisé dans la chambre de combustion par centrifugation résultant du mouvement de rotation de la roue d'injection.

Pour assurer l'étanchéité entre la roue d'injection 12 mobile et la rampe d'injection 20 fixe, la turbomachine comprend en outre une pluralité de joints dynamiques 23, avantageusement de type joints labyrinthes.

Ainsi le carburant présent dans la cavité 22 ne fuit pas dans les autres secteurs de la turbomachine.

La turbomachine comprend en outre un démarreur 40 qui permet d'entrainer en rotation l'arbre du générateur de gaz pendant une phase de démarrage de la turbomachine.

En particulier, la phase de démarrage comprend une première période, durant environ 4 secondes, au cours de laquelle la chambre de combustion n'est pas allumée et l'arbre du générateur de gaz est entrainé en rotation exclusivement par le démarreur. Cette phase est par la suite appelée « phase d'amorçage de la rotation de l'arbre du générateur de gaz ».

La phase de démarrage comprend ensuite une seconde période, au cours de laquelle la chambre de combustion s'allume, et l'arbre du générateur de gaz accélère sous l'action simultanée du démarreur et de la puissance thermique de la turbomachine.

La turbomachine comprend enfin un système 50 de surveillance du degré de cokéfaction au niveau des joints dynamiques.

Ce système comprend une unité de traitement 51, qui est connectée à un ou plusieurs capteurs, et qui est adaptée pour récupérer les mesures des capteurs et pour les traiter de la manière qui est expliquée ci-après pour en déduire un degré de cokéfaction au niveau des joints dynamiques.

L'unité de traitement 51 peut être intégrée à la turbomachine ou alternativement en être séparée, par exemple en étant montée dans l'aéronef ou dans une centrale de surveillance au sol. Le cas échéant, la communication des données entre le ou les capteurs et l'unité de traitement peut être réalisée lors de l'usage de la turbomachine par communication sans fil ou être réalisée épisodiquement lors d'une phase d'arrêt de la turbomachine, en récupérant les données sur les capteurs et en les chargeant dans l'unité de traitement.

L'unité de traitement comprend avantageusement une mémoire 52 permettant de stocker les mesures réalisées lors des précédentes utilisations de la turbomachine, et des moyens de traitement des données comme un processeur 53.

Le système de surveillance comprend également, selon un premier mode de réalisation correspondant au procédé de la figure 2a, un capteur 54 de vitesse de l'arbre du générateur de gaz, qui est adapté pour relever ladite vitesse à une fréquence supérieure ou égale à 1 Hz, de préférence supérieure ou égale à 2 Hz.

Selon un second mode de réalisation correspondant au procédé de la figure 2b, le système de surveillance 50 comprend un dispositif 55 de mesure d'une tension aux bornes démarreur 40 et du courant le traversant, qui est adapté pour relever ces données à une fréquence supérieure ou égale à 2 Hz, de préférence supérieure ou égale à 10 Hz.

Les deux indicateurs utilisés pour surveiller le degré de cokéfaction au niveau des joints peuvent être combinés pour corroborer leurs résultats, le système de surveillance comprend avantageusement à la fois un capteur 54 de vitesse de rotation de l'arbre et un dispositif 55 de mesure de la tension aux bornes du démarreur et du courant le traversant.

Le système de surveillance peut également comprendre d'autres capteurs permettant de fournir des informations supplémentaires à l'unité de traitement pour en déduire un degré de cokéfaction plus précis au niveau des joints.

*Surveillance d'un degré de cokéfaction au niveau de joints dynamiques par la vitesse de rotation de l'arbre de générateur de gaz.*

En référence à la figure 2a, on va maintenant décrire un premier mode de réalisation du procédé 1000 de surveillance de la cokéfaction au niveau des joints dynamiques de la turbomachine 1.

Ce procédé exploite un premier indicateur qui est la décélération de la rotation de l'arbre du générateur de gaz, au cours d'une phase d'autorotation de l'arbre. L'autorotation a lieu lors d'une phase d'arrêt de la turbomachine, lorsque l'arbre du générateur de gaz poursuit sa rotation grâce à sa seule inertie mais n'est plus entrainé en rotation par un autre élément.

Au cours de cette étape, la vitesse de rotation de l'arbre du générateur de gaz est décroissante, mais la décélération peut être plus ou moins importante selon le degré de cokéfaction au niveau des joints dynamiques. En effet, plus les joints dynamiques sont cokéfiés, et plus il existe des frottements entre la rampe d'injection et la roue d'injection, qui freine le mouvement relatif entre ces deux éléments.

Par conséquent, la décélération est plus importante en cas de cokéfaction importante.

De plus, cet impact des frottements sur le freinage est proportionnellement plus important à faible régime que d'autres facteurs influant sur le freinage tels que les frottements aérodynamiques, qui, eux, dépendent de la vitesse de rotation et sont donc proportionnellement moins importants à bas régime.

Par conséquent, l'étude de la décélération de l'arbre 11 à bas régime fournit une indication sur le degré de cokéfaction au niveau des joints dynamiques.

Le procédé comprend donc une étape 1100 de mesure d'une vitesse de rotation de l'arbre du générateur de gaz de la turbomachine par le capteur 54, pendant une phase d'autorotation de l'arbre.

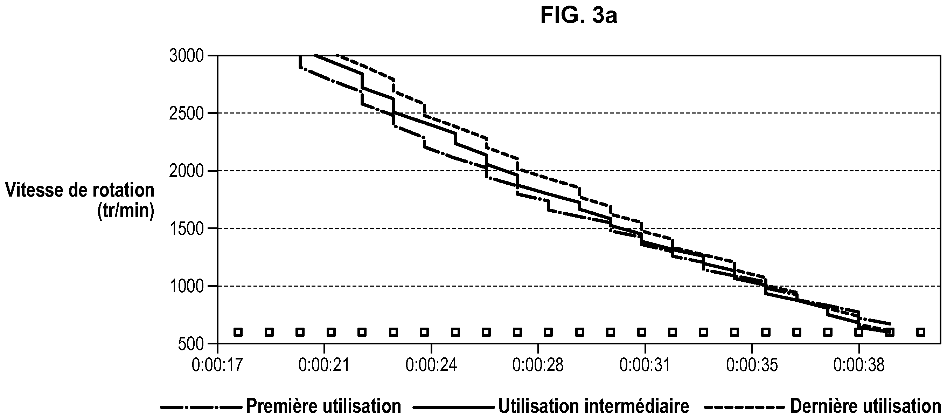

En référence à la figure 3a, on a représenté la décélération de l'arbre du générateur de gaz entre une vitesse de rotation de 3000 tr/min et une vitesse de 600 tr/min pour différentes utilisations d'une turbomachine, la première mesure et la dernière mesure ayant été relevées avec un écart d'environ 250 utilisations.

La pente de la vitesse de rotation est plus élevée en valeur absolue pour la dernière utilisation, pour laquelle la quantité de coke dans les joints dynamiques est plus importante.

De retour à la figure 2a, le procédé comprend ensuite une étape 1200 de détermination, à partir de l'évolution temporelle de la vitesse de rotation acquise, d'un degré de cokéfaction au niveau des joints dynamiques.

En effet, la vitesse de rotation ayant été relevée à une fréquence supérieure à 1 ou 2 Hz pendant une phase de décélération de l'arbre, on peut déterminer sa pente, c'est-à-dire la décélération de l'arbre, entre deux valeurs de vitesses déterminées.

On a indiqué ci-avant que les phénomènes de frottement résultant de la cokéfaction sont plus visibles à bas régime. Par conséquent les valeurs de vitesses entre lesquelles on calcule une décélération comprennent une première vitesse comprise entre 1000 et 2500 tours par minute, de préférence égale à 1000 tours par minute, et une seconde vitesse de rotation comprise entre 500 et 1000 tours par minute, de préférence égale à 700 tours par minute.

L'unité de traitement calcule donc la pente entre ces deux vitesses lors d'une étape 1210. Elle peut ensuite, au cours d'une étape 1220, déduire le degré de cokéfaction au niveau des joints dynamiques de plusieurs manières.

Selon un premier mode de réalisation, au cours d'une étape 1221, l'unité de traitement compare la pente de la vitesse de rotation à un ou plusieurs seuils prédéterminés, correspondant à un ou plusieurs degrés de cokéfaction déterminés ; par exemple un degré de cokéfaction peut correspondre à un nombre d'utilisations de la turbomachine avant que le générateur de gaz ne soit bloqué.

Le seuil peut être établi en fonction d'un nombre important de paramètres dépendant de la turbomachine et de ses conditions d'utilisations.

Selon un second mode de réalisation, au cours d'une étape 1222, l'unité de traitement compare la valeur de la pente à une valeur initiale déterminée de la même manière lors d'une première utilisation ou d'une première mise en service de la turbomachine. L'unité de traitement peut calculer la différence entre les deux valeurs de pente et comparer cette différence à un seuil prédéterminé pour en déduire, comme précédemment, un degré de cokéfaction au niveau des joints.

Enfin, selon un troisième mode de réalisation, au cours d'une étape 1223, l'unité de traitement récupère des données de décélération calculées dans des conditions identiques et stockées dans la mémoire 52 et détermine une vitesse de variation de ladite décélération en fonction de l'utilisation de la turbomachine, par exemple en fonction d'un nombre d'utilisations de la turbomachine (nombre de démarrages).

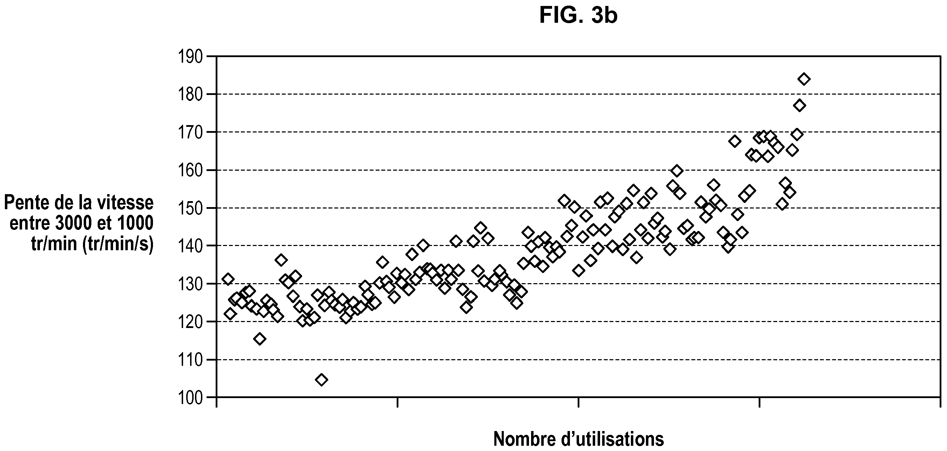

En référence à la figure 3b, on a représenté une évolution, en fonction de l'utilisation de la turbomachine, de la valeur moyenne de la décélération entre 3000 et 1000 tr/min. On constate que la pente de cette évolution tend également à augmenter, c'est-à-dire que la décélération augmente de plus en plus à mesure que le degré de cokéfaction au niveau des joints est importante.

Par conséquent, l'étape 1223 comprend la mesure d'une vitesse de variation de la décélération calculée en fonction de l'utilisation de la turbomachine, et la comparaison de cette vitesse de variation à un seuil prédéterminé.

*Surveillance d'un degré de cokéfaction au niveau des joints dynamiques par le courant consommé par le démarreur et la tension à ses bornes.*

En référence à la figure 2b, on a représenté un autre mode de réalisation du procédé 1000 de surveillance d'un degré de cokéfaction au niveau des joints dynamiques.

Dans ce mode de réalisation, une première étape 1500 comprend la mesure du courant consommé par le démarreur et de la tension à ses bornes, au cours de la phase d'amorçage de la rotation de l'arbre du générateur de gaz par le démarreur, lors du démarrage de la turbomachine.

En effet, pendant cette étape, le démarreur peut être vu comme un moteur à courant continu, et l'on peut donc considérer que le couple du moteur électrique est proportionnel au courant consommé par ce moteur, et que la vitesse de rotation du moteur électrique est proportionnelle à la tension du moteur.

On obtient donc les équations suivantes :

$$Tq_m = K_1 . I_m$$

$$\omega_s = \frac{V_m}{K_1}$$

Où:

- $Tq_m$ est le couple du moteur électrique,
- $K_1$ est une constante,
- $I_m$ est le courant consommé par le moteur électrique,
- $\omega_s$ est la vitesse de rotation du démarreur.

Le couple du moteur électrique compense le couple résistif de l'arbre du générateur de gaz tout en augmentant sa vitesse de rotation.

$$Tq_m = Tq_r + J . \dot{\omega}$$

Où:

- Tqr est le couple résistif de l'arbre du générateur de gaz sur l'arbre du démarreur,
- J est l'inertie de la charge sur l'arbre du démarreur, et
- $\dot{\omega}$ est la dérivée temporelle de $\omega_s$, c'est-à-dire l'accélération de l'arbre du démarreur.

L'augmentation du couple résistif peut être vue au travers de l'évolution du courant et de la tension aux bornes du moteur électrique - c'est-à-dire du démarreur.

$$Tq_r = K_1 . I_m - J . \frac{\dot{V}_m}{K_1}$$

Une donnée représentative du couple résistif de l'arbre du générateur de gaz, qui est homogène à un courant, peut donc être calculée comme suit :

$$imageTq_r = I_m - a . \dot{V}_m + offset$$

Où:

- *imageTq$_r$* est une donnée représentative du couple résistif de l'arbre du générateur de gaz, obtenue à partir du courant $I_m$ consommé par le démarreur et de la tension $V_m$ à ses bornes,
- Im est la valeur moyenne du courant consommé par le moteur électrique pendant la phase d'amorçage de la rotation de l'arbre du générateur de gaz du démarreur.
- $\dot{V}_m$ est la pente moyenne de $V_m$ pendant la phase d'amorçage de la rotation de l'arbre du générateur de gaz par le démarreur,
- a est une constante définie telle que *ImageTq$_r$* = offset pour le premier point de mesure, c'est-à-dire que le couple résistif initial est considéré comme négligeable.
- *of fset* est une constante utilisée pour obtenir une valeur toujours positive du couple malgré la dispersion.

L'étape de mesure du courant et de la tension aux bornes du démarreur est donc suivie d'une étape 1600 de détermination, à partir de ces mesures, du degré de cokéfaction au niveau des joints dynamiques, en calculant au cours d'une étape 1610 à partir des équations qui précèdent la donnée *imageTq$_r$* représentative du couple résistif de l'arbre du générateur de gaz.

Les mesures de courant et de tension sont réalisées avec le dispositif de mesure 55, dont la fréquence de mesure est avantageusement supérieure à 10 Hz.

La déduction de l'état de cokéfaction au niveau des joints dynamiques 1620 peut être réalisée de différentes manières.

Selon un premier mode de réalisation 1621, la valeur de la donnée *imageTq$_r$* qui est le cas échéant sa valeur moyenne sur la période d'amorçage, peut être comparée à un ou plusieurs seuils prédéterminés, correspondant à un ou plusieurs degrés de cokéfaction déterminés ; par exemple un degré de cokéfaction peut correspondre à un nombre d'utilisations de la turbomachine avant que le générateur de gaz ne soit bloqué.

Selon un mode de réalisation alternatif 1622, l'unité de traitement compare la valeur de la donnée représentative du couple à une valeur initiale déterminée lors d'une première utilisation ou d'une première mise en service de la turbomachine. L'unité de traitement peut calculer la différence entre les deux valeurs et comparer cette différence à un seuil prédéterminé pour en déduire, comme précédemment, un degré de cokéfaction au niveau des joints.

Enfin, selon un troisième mode de réalisation, au cours d'une étape 1623, l'unité de traitement récupère des données *imageTq$_r$* calculées régulièrement dans des conditions identiques et stockées dans la mémoire 52 et détermine une vitesse de variation de ladite donnée en fonction d'un nombre d'utilisations de la turbomachine.

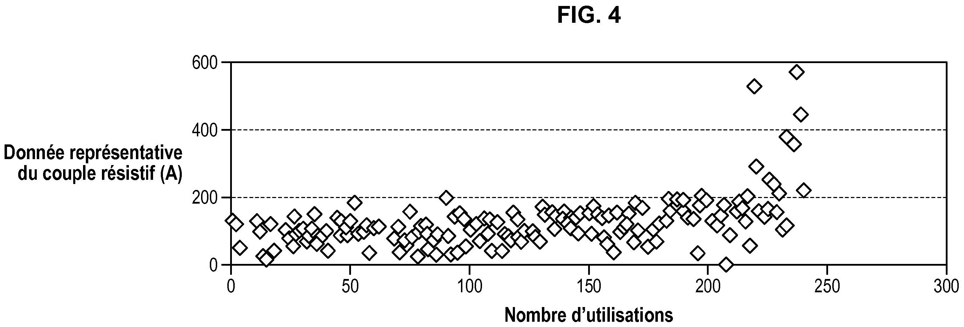

En référence à la figure 4, on a représenté une évolution, en fonction de l'utilisation de la turbomachine, de la valeur de l'image *imageTq_r* du couple résistif de l'arbre du générateur de gaz. On constate que la pente de cette évolution tend également à augmenter, c'est-à-dire que le couple résistif de l'arbre augmente de plus en plus à mesure que le degré de cokéfaction au niveau des joints est important.

Par conséquent, l'étape 1623 comprend la mesure d'une vitesse de variation de l'image *imageTq_r* en fonction de l'utilisation de la turbomachine, et la comparaison de cette vitesse de variation à un seuil prédéterminé.

*Utilisation de plusieurs indicateurs pour la surveillance de la cokéfaction*

Les deux indicateurs décrits ci-avant peuvent être utilisés de façon simultanée pour corroborer ou préciser les informations sur le degré de cokéfaction au niveau des joints dynamiques.

Comme l'indicateur de décélération de l'arbre du générateur de gaz est mesuré lors d'une phase d'arrêt de la turbomachine, tandis que l'indicateur sur le couple résistif de l'arbre est mesuré lors d'une phase de démarrage, il est alors avantageux de confronter les résultats obtenus après un arrêt de la turbomachine.

L'unité de traitement compare alors les résultats obtenus et fournit une indication finale sur le degré de cokéfaction au niveau des joints.

En outre, en fonction d'un degré de cokéfaction détecté par l'un des procédés qui précèdent, une alerte peut être déclenchée pour mettre en place une phase de maintenance de la turbomachine.

**Revendications**

1. Procédé (1000) de surveillance d'un degré de cokéfaction au niveau de joints dynamiques d'une turbomachine comprenant :

- un générateur de gaz (10) comprenant un arbre rotatif (11) et une roue d'injection (12) montée sur ledit arbre, la roue d'injection étant adaptée pour pulvériser du carburant par centrifugation, et
- une rampe d'injection (20), adaptée pour acheminer du carburant jusqu'à la roue d'injection (12),
- des joints dynamiques (23) adaptés pour assurer une étanchéité entre la roue d'injection (12) et la rampe d'injection (20),

le procédé étant **caractérisé en ce qu'**il comprend les étapes consistant à :

- mesurer (1100), au cours d'une phase d'autorotation de la turbomachine, la vitesse de rotation de l'arbre de générateur de gaz, et

- déterminer (1200), à partir de l'évolution temporelle de la vitesse de rotation ainsi mesurée, un degré de cokéfaction au niveau des joints dynamiques.

2. Procédé (1000) de surveillance selon la revendication 1, dans lequel l'étape de détermination (1200) du degré de cokéfaction au niveau des joints dynamiques comprend la mesure de la décélération (1210) de l'arbre de générateur de gaz entre deux vitesses de rotation de l'arbre.

3. Procédé de surveillance selon la revendication 2, dans lequel la mesure de la décélération (1210) est réalisée entre une première vitesse de rotation comprise entre 1000 et 2500 tours par minute, de préférence égale à 1000 tours par minute, et une seconde vitesse de rotation comprise entre 500 et 1000 tours par minute, de préférence égale à 700 tours par minute.

4. Procédé de surveillance selon l'une des revendications 2 ou 3, dans lequel la détermination (1200) du degré de cokéfaction au niveau des joints dynamiques comprend l'une des étapes parmi le groupe suivant :

- la comparaison (1221) de la décélération de l'arbre de générateur de gaz à un seuil prédéterminé,
- la détermination d'une différence entre la décélération mesurée et une décélération initiale de la turbomachine entre les mêmes vitesses de rotation de l'arbre, et la comparaison (1222) de la différence à un seuil prédéterminé, et
- la détermination, à partir de mesures précédentes de la décélération, d'une vitesse de variation de ladite décélération en fonction de l'utilisation de la turbomachine, et la comparaison (1223) de ladite vitesse de variation à un seuil prédéterminé.

5. Procédé (1000) de surveillance selon l'une des revendications précédentes, mis en oeuvre dans une turbomachine (1) comprenant en outre un démarreur (40),

le procédé comprenant en outre les étapes consistant à :

- mesurer (1500), au cours d'une phase d'amorçage de la rotation de l'arbre de générateur de gaz par le démarreur lors du démarrage de la turbomachine, un courant traversant le démarreur et une tension aux bornes du démarreur,
- déterminer (1610), à partir du courant et de la tension mesurés, une donnée représentative d'un couple résistif de l'arbre du générateur de gaz.

**6.** Procédé de surveillance selon la revendication 5, dans lequel l'étape de détermination (1200, 1600) d'un degré de cokéfaction au niveau des joints dynamiques est réalisée à partir de l'évolution temporelle de la vitesse de rotation de l'arbre du générateur de gaz et de la valeur ou l'évolution en fonction de l'utilisation de la turbomachine de la donnée représentative du couple résistif de l'arbre.

**7.** Système (50) de surveillance d'un état de cokéfaction au niveau des joints dynamiques d'une turbomachine comprenant :

- un générateur de gaz (10), comprenant un arbre rotatif (11) et une roue d'injection (12) montée sur ledit arbre, la roue étant adaptée pour pulvériser du carburant par centrifugation,
- une rampe d'injection (20) adaptée pour acheminer du carburant jusqu'à la roue d'injection (12), et
- des joints dynamiques (23), adaptés pour assurer une étanchéité entre la roue d'injection (12) et la rampe d'injection (20),

le système de surveillance (50) étant adapté pour la mise en oeuvre du procédé selon l'une des revendications précédentes et comprenant :

- au moins un capteur (54) de la vitesse de rotation de l'arbre du générateur de gaz, adapté pour effectuer des acquisitions à une fréquence supérieure ou égale à 2 Hz, et
- une unité de traitement (51), comportant une mémoire (52) et des moyens de traitement (53) adaptés pour traiter les mesures de vitesse de rotation pour déterminer un degré de cokéfaction au niveau des joints dynamiques.

**8.** Système de surveillance (50) selon la revendication précédente, dans une turbomachine comprenant en outre un démarreur (40), le système de surveillance comprenant en outre au moins un dispositif (55) de mesure d'une tension aux bornes démarreur et du courant le traversant, ledit dispositif de mesure (55) étant adapté pour acquérir des mesures de tension et de courant à une fréquence supérieure ou égale à 10 Hz.

**9.** Turbomachine (1), comprenant :

- un générateur de gaz (10), comprenant un arbre rotatif (11) et une roue d'injection (12) montée sur ledit arbre, la roue étant adaptée pour pulvériser du carburant par centrifugation,
- une rampe d'injection (20) adaptée pour acheminer du carburant jusqu'à la roue d'injection, et
- des joints dynamiques (23), adaptés pour assurer une étanchéité entre la roue d'injection (12) et la rampe d'injection (20),

la turbomachine étant **caractérisée en ce qu'**elle comprend en outre un système de surveillance (50) selon l'une des revendications 7 ou 8.

**Patentansprüche**

**1.** Verfahren (1000) zur Überwachung eines Verkokungsgrades bei dynamischen Abdichtungen einer Turbomaschine, die Folgendes umfasst:

- einen Gasgenerator (10), der eine Drehwelle (11) und einen Einspritzkranz (12) umfasst, der auf der Welle gelagert ist, wobei der Einspritzkranz angepasst ist, um durch Zentrifugierung Kraftstoff zu zerstäuben, und
- eine Einspritzrampe (20), die angepasst ist, um Kraftstoff bis zum Einspritzkranz (12) zu befördern,
- dynamische Abdichtungen (23), die angepasst sind, um eine Dichtheit zwischen dem Einspritzkranz (12) und der Einspritzrampe (20) zu gewährleisten, wobei das Verfahren **dadurch gekennzeichnet ist,**

**dass** es die Schritte umfasst, die aus Folgendem bestehen:

- Messen (1100) der Drehzahl der Gasgeneratorwelle während einer Phase der Autorotation der Turbomaschine, und
- Bestimmen (1200) eines Verkokungsgrades bei den dynamischen Abdichtungen ausgehend von der zeitlichen Entwicklung der so gemessenen Drehzahl.

**2.** Verfahren (1000) zur Überwachung nach Anspruch 1, wobei der Schritt zur Bestimmung (1200) des Verkokungsgrades bei den dynamischen Abdichtungen die Messung der Verlangsamung (1210) der Gasgeneratorwelle zwischen zwei Drehzahlen der Welle umfasst.

**3.** Verfahren zur Überwachung nach Anspruch 2, wobei die Messung der Verlangsamung (1210) zwischen einer ersten Drehzahl, die zwischen 1000 und 2500 Umdrehungen pro Minute enthalten ist und vorzugsweise gleich 1000 Umdrehungen pro Minute beträgt, und einer zweiten Drehzahl ausgeführt wird, die zwischen 500 und 1000 Umdrehungen pro Minute enthalten ist und vorzugsweise gleich 700 Umdrehungen pro Minute beträgt.

**4.** Verfahren zur Überwachung nach einem der Ansprüche 2 oder 3, wobei die Bestimmung (1200) des Verkokungsgrades bei den dynamischen Abdichtungen einen der Schritte von der folgenden Gruppe umfasst:

> - den Vergleich (1221) der Verlangsamung der Gasgeneratorwelle mit einem vorbestimmten Schwellenwert,
> - die Bestimmung einer Differenz zwischen der gemessenen Verlangsamung und einer anfänglichen Verlangsamung der Turbomaschine zwischen den gleichen Drehzahlen der Welle, und den Vergleich (1222) der Differenz mit einem vorbestimmten Schwellenwert, und
> - die Bestimmung einer Änderungsgeschwindigkeit der Verlangsamung in Abhängigkeit von der Nutzung der Turbomaschine ausgehend von vorhergehenden Messungen der Verlangsamung und den Vergleich (1223) der Änderungsgeschwindigkeit mit einem vorbestimmten Schwellenwert.

5. Verfahren (1000) zur Überwachung nach einem der vorhergehenden Ansprüche, das in einer Turbomaschine (1) durchgeführt wird, die ferner einen Anlasser (40) umfasst, wobei das Verfahren ferner die Schritte umfasst, die aus Folgendem bestehen:

> - Messen (1500) eines Stroms, der durch den Anlasser fließt, und einer Spannung an den Anschlüssen des Anlassers während einer Phase des Beginns der Drehung der Gasgeneratorwelle durch den Anlasser beim Anlassen der Turbomaschine,
> - Bestimmen (1610) eines Datenelements, das für ein Lastmoment der Gasgeneratorwelle charakteristisch ist, ausgehend von dem/der gemessenen Strom und Spannung.

6. Verfahren zur Überwachung nach Anspruch 5, wobei der Schritt zur Bestimmung (1200, 1600) eines Verkokungsgrades bei den dynamischen Abdichtungen ausgehend von der zeitlichen Entwicklung der Drehgeschwindigkeit der Gasgeneratorwelle und dem Wert oder der Entwicklung des Datenelements, das für das Lastmoment der Welle charakteristisch ist, in Abhängigkeit von der Nutzung der Turbomaschine umfasst.

7. System (50) zur Überwachung eines Verkokungsgrades bei dynamischen Abdichtungen einer Turbomaschine, die Folgendes umfasst:

> - einen Gasgenerator (10), der eine Drehwelle (11) und einen Einspritzkranz (12) umfasst, der auf der Welle gelagert ist, wobei der Kranz angepasst ist, um durch Zentrifugierung Kraftstoff zu zerstäuben,
> - eine Einspritzrampe (20), die angepasst ist, um Kraftstoff bis zum Einspritzkranz (12) zu be-

> fördern, und
> - dynamische Abdichtungen (23), die angepasst sind, um eine Dichtheit zwischen dem Einspritzkranz (12) und der Einspritzrampe (20) zu gewährleisten,

wobei das System zur Überwachung (50) für die Durchführung des Verfahrens nach einem der vorhergehenden Ansprüche angepasst ist und Folgendes umfasst:

> - mindestens einen Sensor (54) für die Drehzahl der Gasgeneratorwelle, der angepasst ist, um Erfassungen mit einer Frequenz von höher oder gleich 2 Hz durchzuführen, und
> - eine Verarbeitungseinheit (51), die einen Speicher (52) und Verarbeitungsmittel (53) umfasst, die angepasst sind, um Drehzahlmessungen zu verarbeiten, um einen Verkokungsgrad bei den dynamischen Abdichtungen zu bestimmen.

8. Überwachungssystem (50) nach dem vorhergehenden Anspruch in einer Turbomaschine, die ferner einen Anlasser (40) umfasst, wobei das Überwachungssystem ferner mindestens eine Vorrichtung (55) zur Messung einer Spannung an den Anschlüssen des Anlassers und des Stroms, der durch ihn fließt, umfasst, wobei die Messvorrichtung (55) angepasst ist, um Messungen der Spannung und des Stroms mit einer Frequenz von höher oder gleich 10 Hz zu erfassen.

9. Turbomaschine (1), die Folgendes umfasst:

> - einen Gasgenerator (10), der eine Drehwelle (11) und einen Einspritzkranz (12) umfasst, der auf der Welle gelagert ist, wobei der Kranz angepasst ist, um durch Zentrifugierung Kraftstoff zu zerstäuben,
> - eine Einspritzrampe (20), die angepasst ist, um Kraftstoff bis zum Einspritzkranz zu befördern, und
> - dynamische Abdichtungen (23), die angepasst sind, um eine Dichtheit zwischen dem Einspritzkranz (12) und der Einspritzrampe (20) zu gewährleisten,

wobei die Turbomaschine **dadurch gekennzeichnet ist, dass** sie ferner ein Überwachungssystem (50) nach einem der Ansprüche 7 oder 8 umfasst.

## Claims

1. A method (1000) for monitoring a degree of coking at dynamic seals of a turbine engine comprising:

> - a gas generator (10) comprising a rotary shaft (11) and an injection wheel (12) mounted on said shaft, the injection wheel being adapted for spraying fuel by centrifugation, and
- an injection manifold (20), adapted for conveying fuel as far as the injection wheel (12),
- dynamic seals (23) adapted for ensuring a seal between the injection wheel (12) and the injection manifold (20),

the method being **characterized in that** it comprises the steps of:

- measuring (1100), during a self-rotation phase of the turbine engine, the speed of rotation of the gas generator shaft, and
- determining (1200), from the time-dependent change of the thereby measured speed of rotation, a degree of coking at the dynamic seals.

2. The monitoring method (1000) according to claim 1, wherein the step (1200) for determining the degree of coking at the dynamic seals comprises the measurement of deceleration (1210) of the gas generator shaft between two speeds of rotation of the shaft.

3. The monitoring method according to claim 2, wherein the measurement of deceleration (1210) is conducted between a first speed comprised between 1,000 and 2,500 revolutions per minute, preferably equal to 1,000 revolutions per minute, and a second speed of rotation comprised between 500 and 1,000 revolutions per minute, preferably equal to 700 revolutions per minute.

4. The monitoring method according to one of claims 2 or 3, wherein the determination (1200) of the degree of coking at the dynamic seals comprises one of the steps from among the following group:

- comparing (1221) the deceleration of the gas generator shaft with a predetermined threshold,
- determining a difference between the measured deceleration and an initial deceleration of the turbine engine between the same speeds of rotation of the shaft, and comparing (1222) the difference with a predetermined threshold, and
- determining from preceding measurements of the deceleration, a change rate of said deceleration depending on the use of the turbine engine, and comparing (1223) said change rate with a predetermined threshold.

5. The monitoring method (1000) according to one of the preceding claims, applied in a turbine engine (1) further comprising a starter (40), the method further comprising the steps of:

- measuring (1500) during a phase for initiating the rotation of the gas generator shaft by the starter upon starting the turbine engine, a current flowing through the starter and a voltage on the terminals of the starter,
- determining (1610), from the measured current and voltage, a representative datum of a resistive torque of the shaft of the gas generator.

6. The monitoring method according to claim 5, wherein the step (1200, 1600) for determining the degree of coking at the dynamic seals is achieved from the time-dependent change in the speed of rotation of the shaft of the gas generator and from the value or time-dependent change in the representative datum of a resistive torque of the shaft depending on the use of the turbine engine.

7. A system (50) for monitoring a coking condition at the dynamic seals of a turbine engine comprising:

- a gas generator (10), comprising a rotary shaft (11) and an injection wheel (12) mounted on said shaft, the wheel being adapted for spraying fuel by centrifugation,
- an injection manifold (20), adapted for conveying fuel as far as the injection wheel (12), and
- dynamic seals (23), adapted for ensuring a seal between the injection wheel (12) and the injection manifold (20),

the monitoring system (50) being adapted for applying the method according to one of the preceding claims and comprising:

- at least one sensor (54) for the speed of rotation of the shaft of the gas generator, adapted for carrying out acquisitions at a frequency greater than or equal to 2 Hz, and
- a processing unit (51), including a memory (52) and processing means (53) adapted for processing the measurements of speed of rotation in order to determine a degree of coking at the dynamic seals.

8. The monitoring system (50) according to the preceding claim, wherein a turbine engine further comprising a starter (40), the monitoring system further comprising at least one device (55) for measuring a voltage on the terminals of the starter and the current flowing through it, said measurement device (55) being adapted for acquiring voltage and current measurements at a frequency greater than or equal to 10 Hz.

9. A turbine engine (1), comprising:

- a gas generator (10), comprising a rotary shaft (11) and an injection wheel (12) mounted on said shaft, the wheel being adapted for spraying fuel by centrifugation,
- an injection manifold (20), adapted for conveying fuel as far as the injection wheel, and
- dynamic seals (23), adapted for ensuring a seal between the injection wheel (12) and the injection manifold (20),

the turbine engine being **characterized in that** it further comprises a monitoring system (50) according to one of claims 7 or 8.

EP 3 044 435 B1

**FIG. 1a**

## FIG. 1b

## FIG. 2a

1000

Mesure vitesse de rotation — 1100

**Détermination degré de cokéfaction**

Calcul décélération — 1210

1200

1220

Comparaison seuil

Comparaison valeur initiale

Comparaison variation/seuil

1221

1222

1223

## FIG. 2b

1000

Mesure courant/tension — 1500

**Détermination degré de cokéfaction**

Calcul donnée image du couple — 1610

1600

1620

Comparaison seuil

Comparaison valeur initiale

Comparaison variation/seuil

1621

1622

1623

FIG. 3a

Vitesse de rotation (tr/min)

—·—·— Première utilisation   ——— Utilisation intermédiaire   -------- Dernière utilisation

## FIG. 3b

## FIG. 4

Donnée représentative
du couple résistif (A)

Nombre d'utilisations

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1840470 A